Europäisches Patentamt

European Patent Office

Office européen des brevets

(19)

(11) Numéro de publication: **0 262 014**
**B1**

(12) **FASCICULE DE BREVET EUROPEEN**

(45) Date de publication du fascicule du brevet:
06.06.90

(51) Int. Cl.⁵: **F16D 65/56**

(21) Numéro de dépôt: 87401939.1

(22) Date de dépôt: 27.08.87

(54) **Entretoise de réglage automatique pour frein à tambour et flan pour la réalisation du corps d'une telle entretoise.**

(30) Priorité: 24.09.86 FR 8613325

(43) Date de publication de la demande:
30.03.88 Bulletin 88/13

(45) Mention de la délivrance du brevet:
06.06.90 Bulletin 90/23

(84) Etats contractants désignés:
**DE ES GB IT**

(56) Documents cités:
**EP-A- 0 042 640**
**EP-A- 0 077 726**
**EP-A- 0 178 966**
**FR-A- 2 587 428**
**US-A- 4 148 380**

(73) Titulaire: **BENDIX France, 126, rue de Stalingrad,
F-93700 Drancy(FR)**

(72) Inventeur: **Michoux, Eric, 17, rue du Docteur Bring,
F-94350 Villiers Sur Marne(FR)**
Inventeur: **Moreau, Jean, 34, rue Pelloutier,
F-92110 Clichy(FR)**
Inventeur: **Denree, Michel, 10 Place Pluton,
F-93600 Aulnay Sous Bois(FR)**

(74) Mandataire: **Timoney, Ian Charles Craig et al, BENDIX
FRANCE Division Technique Service Brevets Bendix
Europe 126, rue de Stalingrad, F-93700 Drancy(FR)**

ACTORUM AG

## Description

La présente invention concerne les dispositifs de réglage automatique destinés à compenser automatiquement l'usure des garnitures de friction des segments de frein à tambour et, plus particulièrement, une entretoise de réglage automatique pour frein à tambour, destinée à être montée entre deux segments du frein, l'entretoise comportant un corps d'entretoise et un système à vis et écrou dont la vis est reçue dans un logement cylindrique du corps d'entretoise et dont l'écrou coopère sélectivement avec un cliquet solidaire d'une lame métallique montée sur le corps d'entretoise, ce dernier comprenant une partie principale allongée de section sensiblement rectangulaire et une tête d'extrémité élargie dans laquelle est formé longitudinalement le logement cylindrique.

Une entretoise de ce type est décrite dans le document EP-A-0 178 966.

Dans ce document, le corps d'entretoise est constitué sous la forme d'une seule pièce en fonderie à partir d'un alliage métallique ductile, typiquement en bronze. Quoique présentant des avantages de réduction de coûts par rapport aux corps d'entretoise réalisés par forgeage à partir d'un tube, le corps d'entretoise de ce document se révèle relativement onéreux au niveau de l'alliage qui doit être retenu pour offrir la tenue mécanique nécessaire, le caractère massif du corps d'entretoise présentant en outre des inconvénients de logeabilité et de poids.

La présente invention a pour objet de proposer une entretoise de réglage automatique du type considéré permettant des coûts de production encore abaissés tout en présentant des caractéristiques de tenue mécanique améliorées avec une logeabilité meilleure et un poids réduit en gardant la faculté d'adapter aisément au moins la lame élastique portant le cliquet coopérant avec l'écrou du système vis-écrou.

Pour ce faire, selon une caractéristique de l'invention, le corps d'entretoise est formé à partir d'une plaque métallique conformée pour présenter deux ailes transversales d'extrémité qui sont roulées à repliement avec leurs bord latéraux jointifs pour constituer la tête d'extrémité élargie, dans laquelle est formé le logement cylindrique.

Selon une autre caractéristique de l'invention, la lame élastique portant le cliquet est montée sur une première arête de la partie principale allongée demeurant plane de la plaque au moyen d'au moins une première protubérance faisant saillie vers l'extérieur par rapport à cette première arête et formée initialement lors de la découpe en forme de la plaque ou flan de départ.

L'entretoise selon la présente invention convient tout particulièrement pour un dispositif de rattrapage automatique à inhibition par moyen sensible à la température du type comprenant un bi-lame d'inhibition.

Aussi, selon une autre caractéristique de l'invention, l'entretoise comprend un bi-lame d'inhibition du rattrapage automatique monté sur une seconde arête de la partie principale allongée de la plaque au moyen d'au moins une seconde protubérance faisant saillie vers l'extérieur par rapport à cette seconde arête.

D'autres caractéristiques et avantages de la présente invention ressortiront de la description suivante d'un mode de réalisation donné à titre illustratif mais nullement limitatif, faite en relation avec les dessins annexés, sur lesquels :

- la figure 1 est une vue schématique d'un agencement de dispositif de réglage automatique de frein à tambour comportant un corps d'entretoise selon l'invention ;
- les figures 2 et 3 sont des vues de face et de dessus du corps d'entretoise du dispositif de la figure 1 ; et
- la figure 4 est une vue du flan métallique à partir duquel est formé le corps d'entretoise des figures 2 et 3.

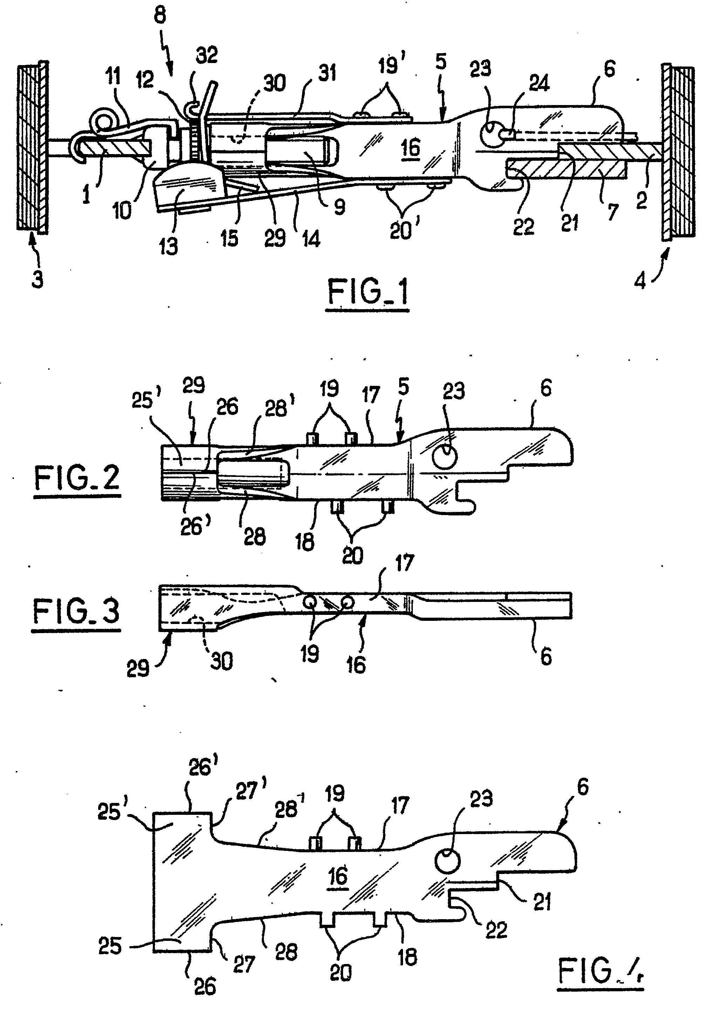

Comme on le voit sur la figure 1 on a représenté une entretoise de réglage automatique de frein à tambour du type faisant l'objet du document EP-A 0 77 726 comprenant une entretoise de réglage automatique allongée disposée en appui par chacune de ses extrémités opposées ente les âmes 1 et 2 de deux segments de frein 3 et 4, respectivement, d'un frein à tambour de véhicule automobile, l'entretoise de réglage automatique étant aménagée typiquement au voisinage du moteur hydraulique d'actionnement disposé également entre les deux âmes 1 et 2 pour solliciter en écartement les segments 3 et 4 en engagement de friction contre un tambour tournant de frein (non représenté). L'entretoise de réglage automatique comprend, de façon générale, un corps d'entretoise 5 coopérant, par une extrémité d'appui 6, avec l'âme 2 du segment 4 et avec un levier 7 de frein à main ou frein de parcage du frein à tambour, et un système à vis et écrou, désigné généralement par la référence 8, coopérant, par son extrémité opposée au corps d'entretoise 5, avec l'âme 1 de l'autre segment 3. Le système à vis et écrou 8 comporte une vis 9 pourvue d'une tête 10 maintenue en engagement non tournant par un ressort 11, avec l'âme 1 du segment 3, et un écrou 12 engagé sur la vis 9 et portant extérieurement une denture destinée à coopérer sélectivement avec un cliquet 13 solidaire de l'extrémité en porte-à-faux d'une lame élastique 14 montée sur le corps d'entretoise 5. Le cliquet 13 est normalement maintenu écarté de la denture de l'écrou 12 par un basculeur ou équerre de réglage 15 engagé librement sur la vis 9 et interposé entre l'écrou 12 et la face d'extrémité adjacente du corps d'entretoise 5.

Conformément à l'invention, le corps d'entretoise 5 est réalisé à partir d'une plaque métallique en acier, d'épaisseur d'environ 5mm, préalablement découpée à plat, comme représenté sur la figure 4, pour présenter une partie centrale allongée 16 délimitée latéralement par deux arêtes sensiblement parallèles 17 et 18 d'où font saillies respectivement des protubérances 19 et 20. La partie principale allongée 16 se prolonge d'un côté pour constituer l'extrémité d'appui 6 qui présente, un profil en gradin définissant deux épaulements d'appui 21 et 22 pour l'âme 2 et le levier de frein à main 7. L'extrémité d'appui 6 comporte également une ouverture 23 destinée à recevoir l'extrémité d'un ressort 24 accroché par ailleurs à l'âme 2 pour solliciter en rapprochement cette dernière vers l'épaulement correspondant 21. A l'opposé de l'extrémité d'appui 6, la partie principale allongée 16 s'évase en une zone à profil évolutif se terminant par deux ailes transversales d'extrémité 25 et 25' comportant des bords latéraux parallèles 26, 26' dont les arêtes postérieures 27,27' se raccordent aux arêtes 17 et 18 par des arêtes symétriques 28,28' convergeant vers la partie principale allongée 16.

Le flan de la figure 4 est ensuite mis en forme en décalant tout d'abord légèrement transversalement une partie de l'extrémité d'appui 6, comme on le voit sur la figure 3, puis en rabattant dans la même direction les ailes 25 et 25', après quoi celles-ci, ainsi que la zone intermédiaire délimitée par les arêtes 28 et 28', sont roulées pour amener jointifs les bords latéraux 26 et 26' en constituant ainsi une tête d'extrémité élargie 29 sensiblement tubulaire présentant un canal intérieur qui est ensuite alésé pour constituer le logement cylindrique 30 pour la vis 9, le logement 30 étant totalement clos périphériquement dans la tête élargie 29 et se prolongeant vers la partie principale allongée 16 par une partie partiellement fermée périphériquement, le logement 30 s'interrompant en avant de la partie principale allongée 16. On dresse ensuite la zone de jointoiement des bords 26 et 26', ainsi que les zones dans le prolongement des arêtes 17 et 18, sensiblement dans le plan de ces dernières. On façonne ensuite les protubérances 20 et 19 pour leur donner une configuration de picots cylindriques qui seront engagés, pour les protubérances 20, dans des trous de la lame élastique 14 et, si besoin est, pour les picots 19, dans des trous analogues d'un bi-lame 31 comportant une extrémité libre 32 traversant un orifice dans le basculeur 15 pour inhiber le fonctionnement de ce dernier, conformément à l'enseignement du document EP-A 219 384 publié le 22.04.89 (⪤ FR-A 2 587 428), dont le contenu est supposé intégré ici pour référence. La lame élastique 14 et, le cas échéant, le bi-lame 31 sont solidarisés à la partie de corps principale 16 en écrasant les protubérances 19 et 20 pour former des têtes de sertissage 19' et 20', comme on le voit sur la figure 1. L'entretoise est ainsi prête à recevoir le système à vis écrou 8 et à être montée en place dans un frein à tambour.

**Revendications**

1. Entretoise de réglage automatique de frein à tambour, destinée à être montée entre deux segments de frein, (3,4), comportant un corps d'entretoise (5) et un système à vis et écrou (8) dont la vis (9) est reçue dans un logement cylindrique (30) du corps d'entretoise et dont l'écrou (12) coopère sélectivement avec un cliquet (13) solidaire d'une lame élastique métallique (14) montée sur le corps d'entretoise (5), ce dernier comprenant une partie principale allongée de section sensiblement rectangulaire (16) et une tête d'extrémité élargie (29) dans laquelle est formée longitudinalement le logement cylindrique (30), caractérisé en ce que le corps d'entretoise (5) est formé à partir d'une plaque métallique conformée pour présenter deux ailes transversales d'extrémité (25,25') roulées à repliement avec leur bords latéraux (26,26') jointifs pour constituer la tête d'extrémité élargie (29).

2. Entretoise selon la revendication 1, caractérisée en ce que la lame élastique (14) est montée sur une première arête (18) de la partie principale allongée (16) au moyen d'au moins une première protubérance (20) faisant saillie par rapport à cette première arête.

3. Entretoise selon la revendication 2, caractérisée en ce qu'elle comprend un bi-lame (31) d'inhibition du rattrapage automatique monté sur une seconde arête (17) de la partie principale allongée (16) au moyen d'au moins une seconde protubérance (19) faisant saillie par rapport à cette seconde arête.

4. Entretoise selon l'une des revendications précédentes, caractérisée en ce que la partie de corps principale (16) se prolonge, à l'opposé de la tête d'extrémité élargie (29), par une extrémité d'appui (6) comportant deux épaulements d'appui (21 ; 22) pour une âme (2) de segment de frein (4) et un levier de frein à main (7).

5. Flan pour la réalisation d'un corps d'entretoise de rattrapage automatique selon l'une des revendications précédentes, caractérisé en ce qu'il présente une partie principale allongée (16) prolongée par une zone d'extrémité avec deux ailes transversales d'extrémité (25,25') se raccordant à la partie principale par une zone à profil évolutif convergeant (28 ; 28') vers cette partie principale.

**Claims**

1. Drum-brake automatic adjustment spacer intended to be mounted between two brake shoes, (3, 4), comprising a spacer body (5) and a screw/nut system (8), of which the screw (9) is received in a cylindrical receptacle (30) of the spacer body and the nut (12) interacts selectively with a pawl (13) integral with a resilient metal blade (14) mounted on the spacer body (5), the latter comprising an elongate main part of substantially rectangular cross-section (16) and a widened end head (29), in which the cylindrical receptacle (30) is formed longitudinally, characterized in that the spacer body (5) is produced from a metal plate shaped so as to have two transverse end wings (25, 25') rolled up, with bending, with their lateral margins (26, 26') contiguous, to constitute the widened end head (29).

2. Spacer according to Claim 1, characterized in that the elastic blade (14) is mounted on a first edge (18) of the elongate main part (16) by means of at least one first protuberance (20) projecting relative to this first edge.

3. Spacer according to Claim 2, characterized in that it has a bimetallic strip (31) for inhibiting the automatic compensation, mounted on a second edge (17) of the elongate main part (16) by means of at least one second protuberance (19) projecting relative to this second edge.

4. Spacer according to one of the preceding claims, characterized in that the main body (16) is extended, opposite the widened end head (29), by a bearing end (6) having two bearing shoulders (21; 22) for a web (2) of a brake shoe (4) and for a handbrake lever (7).

5. Blank for producing an automatic compensation spacer body according to one of the preceding claims, characterized in that it has an elongate main part (16) extended by an end zone with two transverse end wings (25, 25') joined to the main part via a zone of evolute profile (28; 28') converging towards this main part.

welches in Richtung auf diesen Hauptabschnitt konvergiert.

**Patentansprüche**

1. Strebe mit selbsttätiger Nachstellung für eine Trommelbremse, die zwischen zwei Bremssegmenten (3, 4) anbringbar ist, mit einem Strebenkörper (5) und einem Schrauben-Mutter-System (8), dessen Schraube (9) in einer zylindrischen Aufnahme (30) des Strebenkörpers angeordnet ist und dessen Mutter (12) wahlweise mit einer Klinke (13) zusammenwirkt, die mit einem am Strebenkörper (5) angebrachten metallischen Federblatt (14) fest verbunden ist, wobei der Strebenkörper einen länglichen Hauptabschnitt von im wesentlichen rechteckigem Querschnitt sowie einen erweiterten Endkopf (29) aufweist, in dem die zylindrische Aufnahme (30) in Längsrichtung gebildet ist, dadurch gekennzeichnet, daß der Strebenkörper (5) aus einem Blech gebildet ist, das so geformt ist, daß es zwei quer verlaufende Endabschnitte (25, 25') aufweist, die so umgerollt sind, daß ihre Seitenränder (26, 26') aneinander anliegen, um den erweiterten Endkopf (29) zu bilden.

2. Strebe nach Anspruch 1, dadurch gekennzeichnet, daß das Federblatt (14) an einer ersten Anlage (18) des länglichen Hauptabschnittes (16) mittels mindestens eines ersten Vorsprunges (20) angebracht ist, welcher von der ersten Anlage absteht.

3. Strebe nach Anspruch 2, dadurch gekennzeichnet, daß sie eine eine selbsttätige Nachstellung verhindernde Bilammelle (31) aufweist, die an einer zweiten Anlage (17) des länglichen Hauptabschnittes (16) mittels mindestens eines zweiten Vorsprunges (19) angebracht ist, der von der zweiten Anlage absteht.

4. Strebe nach einem der vorhergehenden Ansprüche, dadurch gekennzeichnet, daß der Hauptabschnitt (16) entgegengesetzt zu dem erweiterten Endkopf (29) in ein Anlagenende (6) übergeht, das zwei Anschlagsschultern (21; 22) für einen Steg (2) des Bremssegmentes (4) sowie einen handbetätigbaren Bremshebel (7) aufweist.

5. Blech zur Herstellung eines Strebenkörpers zur selbsttätigen Nachstellung nach einem der vorhergehenden Ansprüche, dadurch gekennzeichnet, daß es einen länglichen Hauptabschnitt (16) aufweist, der durch einen Endbereich mit zwei quer verlaufenden Endabschnitten (25, 25') verlängert ist, der sich an den Hauptabschnit durch einen Bereich veränderlichen Profils (28; 28') anschließt,

FIG_1

FIG_2

FIG_3

FIG_4